# FASCICULE DE BREVET EUROPEEN

(11) **EP 2 746 164 B1**
(45) Date de publication et mention de la délivrance du brevet: **24.02.2016**
(21) Numéro de dépôt: 13198603.6
(22) Date de dépôt: 19.12.2013
(51) Int. Cl.: B64G 1/22, F16F 1/373, F16F 1/36

(54) **Structure dépliable comprenant un dispositif antichoc**
Aufklappbare Struktur, die eine stoßdämpfende Vorrichtung umfasst
Extendable structure including a shock-absorber device

(30) Priorité: 21.12.2012 FR 1203558
(43) Date de publication de la demande: 25.06.2014
(73) Titulaire: Thales, 92200 Neuilly Sur Seine (FR)
(72) Inventeur: Mistral, Alain, 06150 CANNES LA BOCCA (FR); Legrand, Silvain, 06150 CANNES LA BOCCA (FR); Blons, Gaël, 06150 CANNES LA BOCCA (FR)
(74) Mandataire: Collet, Alain

(56) Documents cités:
- WO-A1-86/00051
- WO-A1-2006/072332
- GB-A- 2 198 209
- US-A- 5 988 609
- US-A- 6 158 088

## Description

L'invention concerne une structure comprenant au moins deux panneaux dépliables telle que par exemple décrite dans le document US 6 158 088, et un dispositif antichoc destiné à éviter que les panneaux ne s'entrechoquent lorsqu'ils sont repliés l'un contre l'autre.

L'invention s'applique tout particulièrement mais non exclusivement au domaine spatial et notamment dans des structures de panneaux solaires ou d'antennes plates de satellite qui sont formés de différents panneaux articulés entre eux et dont le déploiement intervient dans l'espace. De nombreuses autres applications peuvent être envisagées aussi bien dans le domaine spatial que sur terre.

Les panneaux sont articulés entre eux au moyen d'articulations auto motorisées comme par exemple celles décrites dans les demandes de brevet FR 2 635 077 et FR 2 902 763. En position repliée, avant et lors du lancement du satellite, des tirants maintiennent les panneaux repliés les uns contre les autres. Lors du déploiement du satellite dans l'espace, les tirants sont libérés permettant ainsi le déploiement de la structure.

En position repliée, notamment lors du lancement du satellite, la structure est soumise à de nombreuses contraintes mécaniques, comme des vibrations. Les panneaux solaires ou les éléments plats d'antenne sont souvent de grande dimension et les vibrations peuvent entrainer des chocs entre panneaux voisins pouvant entrainer des détériorations comme des fissures ou même des ruptures.

Pour limiter ces risques des pions amortisseurs peuvent être disposés, notamment aux coins des panneaux, pour éviter que ceux-ci ne s'entrechoquent. Ces pions sont fixés à un premier panneau et un second panneau voisin vient prendre appui contre les pions lorsque la structure est en position repliée.

Cette solution nécessite une mise en oeuvre longue et fastidieuse. De plus des anomalies de déploiement se sont produites ayant pour cause une adhérence du pion amortisseur sur le panneau contre lequel le pion prend appui.

L'invention vise à pallier tout ou partie des problèmes cités plus haut en proposant de remplacer le pion par un élément monobloc facile à mettre en oeuvre. On choisira un matériau réduisant le risque d'adhérence.

L'invention vise à pallier tout ou partie des problèmes cités plus haut en proposant de remplacer le pion par un élément monobloc facile à mettre en oeuvre. On choisira un matériau réduisant le risque d'adhérence.

A cet effet, l'invention a pour objet une structure comprenant au moins deux panneaux dépliables et un dispositif antichoc destiné à éviter que les panneaux ne s'entrechoquent lorsqu'ils sont repliés l'un contre l'autre, caractérisée en ce que le dispositif antichoc comprend un élément monobloc comprenant deux plaques et des bras reliant les deux plaques, en ce qu'une première des deux plaques est fixée au premier panneau, en ce qu'une seconde des deux plaques forme une butée contre laquelle vient s'appuyer le second panneau et en ce que les bras forment un élément élastique entre les deux plaques.

L'invention sera mieux comprise et d'autres avantages apparaîtront à la lecture de la description détaillée d'un mode de réalisation donné à titre d'exemple, description illustrée par le dessin joint dans lequel :
Les figures 1 a et 1b représentent une structure de panneaux en position dépliée pour la figure 1 a et en position repliée pour la figure 1b ;
La figure 2 représente un détail de montage d'un dispositif antichoc ;
Les figures 3 et 4 représentent le dispositif antichoc seul.

Par souci de clarté, les mêmes éléments porteront les mêmes repères dans les différentes figures.

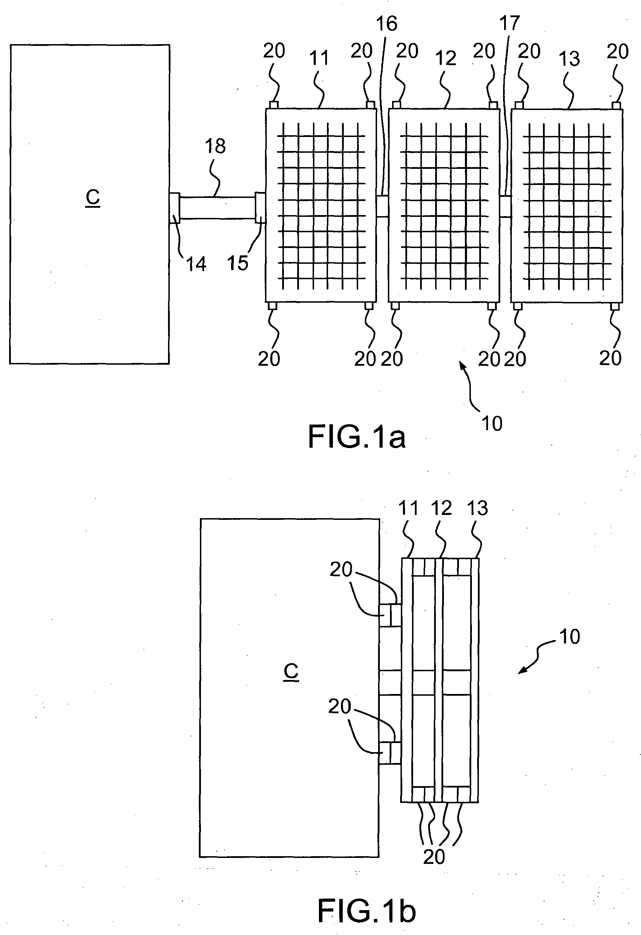

La figure 1 représente une structure 10 comprenant trois panneaux 11, 12 et 13 destinés à équiper un satellite dont le corps porte le repère C. Il peut s'agir par exemple de panneaux solaires destinés à alimenter le satellite en énergie électrique ou encore de panneaux d'antenne destinés à émettre ou à recevoir des signaux de télécommunication. La structure possède plusieurs articulations permettant de la déployer. Plus précisément, lors du lancement du satellite les panneaux 11, 12 et 13 sont repliés les uns contre les autres comme représenté sur la figure 1b et une fois que le satellite a atteint sa position dans l'espace, les panneaux sont déployés. A cet effet, la structure comprend, dans l'exemple représenté, quatre articulations 14, 15, 16 et 17. L'articulation 14 relie un bras 18 de la structure 10 au corps C du satellite dans lequel sont installés notamment des équipements électroniques. L'articulation 15 relie le bras 18 au panneau 11, l'articulation 16 relie les panneaux 11 et 12 et l'articulation 17 relie les panneaux 12 et 13. Les panneaux 11, 12 et 13 sont plans et rectangulaires. Ils s'étendent dans le plan de la figue 1 a en position déployée. Les articulations 14, 15, 16 et 17 possèdent un degré de liberté en rotation ce qui permet de replier les panneaux 11, 12 et 13 en accordéon les uns contre les autres. Les articulations sont avantageusement auto-motorisées telle que par exemple décrites dans les demandes de brevet FR 2 635 077 et FR 2 902 763.

Comme on l'a expliqué plus haut, lors du lancement, le satellite est soumis à des contraintes mécaniques sévères telles que des vibrations importantes. Pour éviter que les panneaux en position repliée ne s'entrechoquent lors du lancement et plus généralement lorsqu'ils sont soumis à des contraintes mécaniques, la structure 10 comprend des cales solidaires des panneaux 11, 12 et 13 et servant de butée. Dans l'exemple représenté, quatre cales 20 équipent chacun des panneaux. Les cales 20 sont avantageusement identiques afin de standardiser leur production en série. Une cale 20 est montée à chacun des coins d'un panneau. En position replié, une cale 20 d'un panneau vient en butée contre une autre cale 20 du panneau voisin. Les cales peuvent aussi servir de butée entre un panneau et le corps du satellite. Le nombre de cales 20 peut être plus important. Il est défini en fonction des dimensions des panneaux, de leur rigidité et des contraintes mécaniques qu'ils doivent supporter. Il est également possible de disposer des cales 20 de telle sorte qu'une cale 20 fixée à un panneau puisse venir en appui directement contre le panneau voisin. Une fonction des cales 20 est de maintenir les panneaux à distance les uns des autres lorsque la structure est en position repliée.

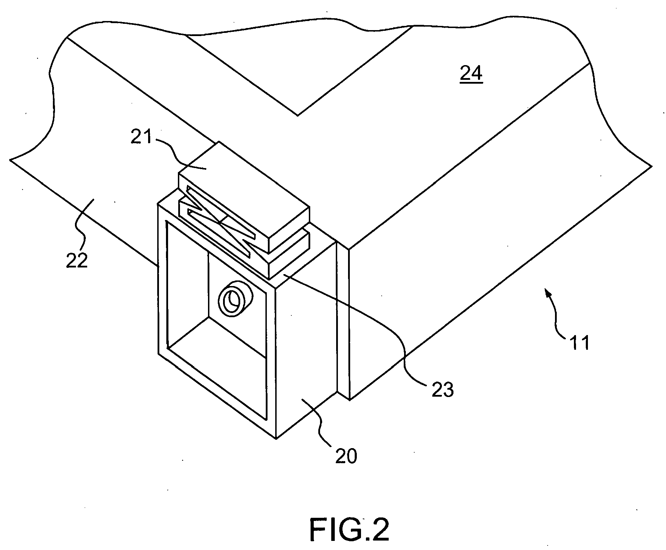

La figure 2 représente en détail une cale 20 montée sur un des panneaux, par exemple le panneau 11. La cale 20 est équipée d'un dispositif antichoc 21. La cale 20 est par exemple formée d'un pavé rigide fixé par vis sur un chant 22 du panneau 11. Le dispositif antichoc 21 est fixé sur une face 23 du pavé formant la cale 20, la face 23 étant perpendiculaire au chant 22 et donc parallèle à la plus grande surface plane 24 du panneau 11.

Autrement dit, le dispositif antichoc 21 est fixé au premier panneau 11 par l'intermédiaire d'une cale 20.

Le panneau 12, voisin du panneau 11, est équipé d'une cale 20 destinée à venir en contact avec le dispositif 21 lorsque les panneaux sont repliés les uns contre les autres. La cale 20 du panneau 12 peut être dépourvue de dispositif antichoc 21, tout au moins sur sa face venant en contact avec le dispositif antichoc 21 du panneau 11. Dans ce mode de réalisation le dispositif 21 permet d'amortir les contacts entre deux cales 20 en regard.

A titre d'alternative, il est possible de fixer directement le dispositif antichoc 21 sur le panneau 11. Dans ce cas, la fixation du dispositif 21 est faite sur la face 24 du panneau 11 et le dispositif 21 est destiné à venir en appui contre le panneau voisin 12 sur une de ses plus grandes faces en regard de la face 24.

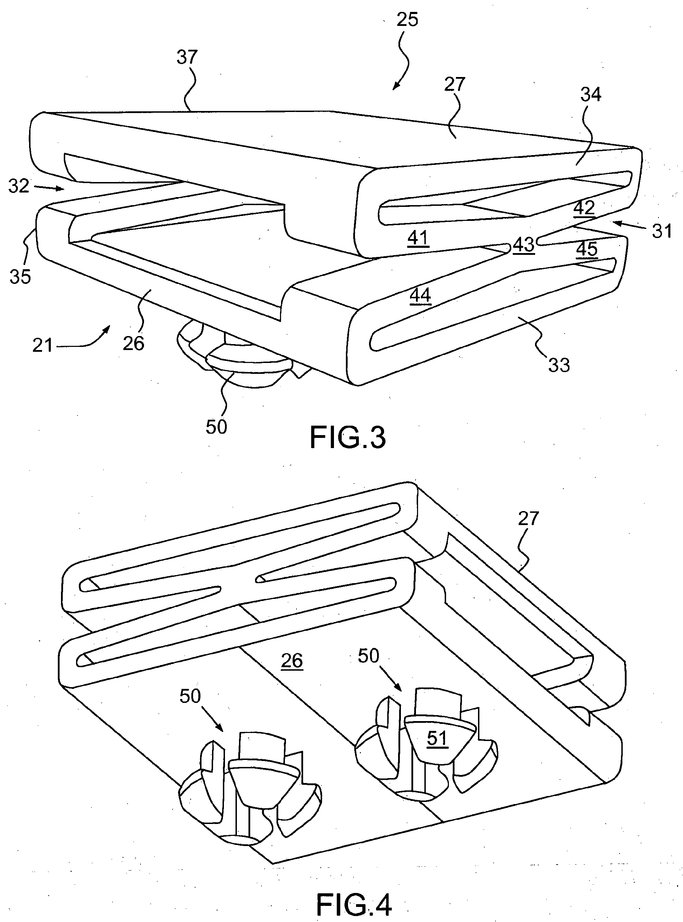

La figure 3 représente en perspective un dispositif antichoc 21 seul. Le dispositif 21 comprend un élément monobloc 25 formé de deux plaques 26 et 27 et d'un élément élastique reliant les deux plaques 26 et 27. La plaque 26 est fixée sur la cale 20 du panneau 11 et la plaque 27 est destinée à venir en butée contre la cale 20 du panneau 12. L'élément élastique est formé de bras reliant les deux plaques 26 et 27. L'élasticité est assurée par la flexion des bras. L'élasticité permet d'éviter les chocs directs entre les panneaux 11 et 12 ou entre les cales 20 des deux panneaux 11 et 12.

Avantageusement, les bras sont répartis en deux groupes 31 et 32. Le groupe 31 relie un coté 33 de la plaque 26 et un coté 34 de la plaque 27. Le groupe 32 relie un coté 35 de la plaque 26 et un coté 37 de la plaque 27. Pour la plaque 26, le coté 33 est opposé au coté 35 et pour la plaque 27, le coté 34 est opposé au coté 37. Les deux groupes de bras sont symétriques afin d'assurer un rapprochement des deux plaques 26 et 27 sensiblement de façon parallèle lorsque le panneau 12 vient en en butée contre le panneau 11.

Dans le mode de réalisation représenté, chacun des groupes 31 et 32 comprend quatre bras agencés en forme de lettre X, dont une base est ancrée dans la plaque 26 et dont un sommet est ancré dans la plaque 27.

Plus précisément, les deux groupes 31 et 32 sont identiques. Le groupe 31, bien visible sur la figure 3 comprend les bras 41 et 42 fixés à l'une de leur extrémité à la plaque 27 chacun à une extrémité du coté 34. Les autres extrémités des bras 41 et 42 sont fixées ensemble pour former un noeud central 43. Le groupe 31 comprend en outre les bras 44 et 45 fixés à l'une de leur extrémité à la plaque 26 chacun à une extrémité du coté 33. Les autres extrémités des bras 44 et 45 sont fixées ensemble au noeud central 43. Lorsque les plaques 26 et 27 se rapprochent sous l'effet d'un effort exercé sur la plaque 27 perpendiculairement à celle-ci, les quatre bras de chaque groupe 31 et 32 fléchissent. Le noeud 43 se rapproche des deux plaques 26 et 27 et peut aller jusqu'au contact avec les plaques 26 et 27. Si l'effort auquel est soumis le dispositif 21 est plus important qu'un effort nécessaire au contact entre le noeud 43 et les plaques 26 et 27, le matériau constituant l'élément monobloc 25 se comprime. Le dimensionnement de l'élément monobloc 25 tient compte de cette compression possible.

L'élément monobloc 25 est par exemple réalisé en matière plastique qui peut être moulée. A titre d'alternative pour une fabrication en séries moins importantes, on pourra réaliser l'élément monobloc 25 par polymérisation en trois dimensions d'une résine, la polymérisation étant réalisée à partir d'un modèle numérique de l'élément monobloc 25. Un tel procédé de fabrication est connu dans la littérature anglo-saxonne sous le nom de « direct manufacturing ». Pour une utilisation de l'invention à bord d'un satellite, on pourra par exemple mettre en oeuvre un polyétheréthercétone également connu par son abréviation : PEEK. Ce matériau présente de bonnes caractéristiques mécaniques compatibles avec un environnement sévère tel que l'environnement spatial.

La plaque 26 peut être fixée à la cale ou au panneau par collage. Ce type de fixation nécessite cependant des manipulations délicates. A titre d'alternative préférée, on peut fixer la plaque 26 par rivet ou au moyen d'au moins un clip 50. Afin de garantir une orientation certaine de l'élément monobloc 25, on peut utiliser deux clips 50, comme visible sur la figure 4. Par clip, on entend l'utilisation d'un organe qui permet la fixation par déformation élastique. Plus précisément, le clip 50 forme une protubérance par rapport à la plaque 26, protubérance destinée à pénétrer dans un trou traversant réalisé dans la cale 20. La protubérance se termine par un crochet 51 destiné à traverser le trou et à retenir l'élément monobloc 25. Lors de l'insertion de la protubérance 50 dans le trou de la cale 20, le crochet 51 est escamoté par déformation élastique et reprend sa forme initiale après avoir débouché du trou assurant ainsi le maintient de l'élément monobloc 25 contre la cale 20. Dans l'exemple représenté, le clip 50 comprend quatre protubérances, chacune terminée par un crochet 51.

Avantageusement, un volume délimité par les deux plaques 26 et 27 et par les deux groupes de bras 31 et 32 est rempli d'un élastomère. On peut par exemple choisir un élastomère de type caoutchouc ayant des propriétés d'amortissement, ce qui permet de dissiper une partie de l'énergie de choc qui peut être produite lorsque deux panneaux viennent au contact l'un de l'autre.

## Revendications

1. Structure comprenant au moins deux panneaux (11, 12, 13) dépliables et un dispositif antichoc (21) destiné à éviter que les panneaux (11, 12, 13) ne s'entrechoquent lorsqu'ils sont repliés l'un contre l'autre, **caractérisée en ce que** le dispositif antichoc (21) comprend un élément monobloc (25) comprenant deux plaques (26, 27) et des bras (41, 42, 43, 44) reliant les deux plaques (26, 27), **en ce qu'**une première des deux plaques (26) est fixée au premier panneau (11), **en ce qu'**une seconde des deux plaques (27) forme une butée contre laquelle vient s'appuyer le second panneau (12) et **en ce que** les bras (41, 42, 43, 44) forment un élément élastique entre les deux plaques (26, 27).

2. Structure selon la revendication 1, **caractérisée en ce que** les bras (41, 42, 43, 44) sont répartis en deux groupes (31, 32), le premier des deux groupes (31) reliant un premier coté (33) de la première plaque (26) et un premier coté (34) de la seconde plaque (27), le second des deux groupes (32) reliant un second (35) coté de la première plaque (26) et un second coté (37) de la seconde plaque (27), pour chacune des plaques (26, 27), le premier coté (33, 34) étant opposé au second coté (35, 37).

3. Structure selon la revendication 2, **caractérisée en ce que** chacun des groupes comprend quatre bras (41, 42, 43, 44) agencés en forme de lettre X, dont une base est ancrée dans la première plaque (26) et dont un sommet est ancré dans la seconde plaque (27).

4. Structure selon l'une quelconque des revendications 2 ou 3, **caractérisée en ce qu'**un volume délimité par les deux plaques (26, 27) et les deux groupes (31, 32) est rempli d'un élastomère.

5. Structure selon l'une des revendications précédentes, **caractérisée en ce que** la première des deux plaques (26) est fixée à au premier panneau (11) au moyen d'au moins un clip (50).

6. Structure selon l'une des revendications 1 à 4, **caractérisée en ce que** la première des deux plaques (26) est fixée à au premier panneau (11) par rivetage.

7. Structure selon l'une des revendications précédentes, **caractérisée en ce que** la première des deux plaques (26) est fixée à au premier panneau (11) par l'intermédiaire d'une cale (20).

## Patentansprüche

1. Struktur, die wenigstens zwei aufklappbare Paneele (11, 12, 13) und eine Stoßdämpfungsvorrichtung (21) umfasst, die Kollisionen der Paneele (11, 12, 13) verhindern soll, wenn sie aneinander geklappt werden, **dadurch gekennzeichnet, dass** die Stoßdämpfungsvorrichtung (21) ein einstückiges Element (25) umfasst, das zwei Platten (26, 27) und die zwei Platten (26, 27) miteinander verbindende Arme (41, 42, 43, 44) umfasst, dadurch, dass eine erste der zwei Platten (26) am ersten Paneel (11) befestigt ist, dadurch, dass eine zweite der zwei Platten (27) ein Widerlager bildet, an dem das zweite Paneel (12) zur Anlage kommt, und dadurch, dass die Arme (41, 42, 43, 44) ein elastisches Element zwischen den zwei Platten (26, 27) bilden.

2. Struktur nach Anspruch 1, **dadurch gekennzeichnet, dass** die Arme (41, 42, 43, 44) in zwei Gruppen (31, 32) unterteilt sind, wobei die erste der zwei Gruppen (31) eine erste Seite (33) der ersten Platte (26) und eine erste Seite (34) der zweiten Platte (27) verbindet, wobei die zweite der zwei Gruppen (32) eine zweite Seite (35) der ersten Platte (26) und eine zweite Seite (37) der zweiten Platte (27) verbindet, wobei für jede der Platten (26, 27) die erste Seite (33, 34) gegenüber der zweiten Seite (35, 37) ist.

3. Struktur nach Anspruch 2, **dadurch gekennzeichnet, dass** jede der Gruppen vier Arme (41, 42, 43, 44) umfasst, die in Form des Buchstabens X angeordnet sind, von dem eine Basis in der ersten Platte (26) verankert ist und ein Scheitelpunkt in der zweiten Platte (27) verankert ist.

4. Struktur nach Anspruch 2 oder 3, **dadurch gekennzeichnet, dass** ein Volumen, das durch die zwei Platten (26, 27) und die zwei Gruppen (31, 32) begrenzt wird, mit einem Elastomer gefüllt ist.

5. Struktur nach einem der vorherigen Ansprüche, **dadurch gekennzeichnet, dass** die erste der zwei Platten (26) an dem ersten Paneel (11) mit wenigstens einer Klammer (50) befestigt ist.

6. Struktur nach einem der Ansprüche 1 bis 4, **dadurch gekennzeichnet, dass** die erste der zwei Platten (26) durch Nieten an dem ersten Paneel (11) befestigt ist.

7. Struktur nach einem der vorherigen Ansprüche, **dadurch gekennzeichnet, dass** die erste der zwei Platten (26) durch einen Keil (20) an dem ersten Paneel (11) befestigt ist.

## Claims

1. A structure comprising at least two extendable panels (11, 12, 13) and a shockproof device (21) intended to prevent said panels (11, 12, 13) from colliding when they are folded against each other, **characterised in that** said shockproof device (21) comprises a one-piece element (25) comprising two plates (26, 27) and arms (41, 42, 43, 44) connecting said two plates (26, 27), **in that** a first of said two plates (26) is fixed to said first panel (11), **in that** a second of said two plates (27) forms an abutment, against which said second panel (12) comes into abutment, and **in that** said arms (41, 42, 43, 44) form a flexible element between said two plates (26, 27).

2. The structure according to claim 1, **characterised in that** said arms (41, 42, 43, 44) are divided into two groups (31, 32), the first of said two groups (31) connecting a first side (33) of said first plate (26) and a first side (34) of said second plate (27), the second of said two groups (32) connecting a second side (35) of said first plate (26) and a second side (37) of said second plate (27), with said first side (33, 34), for each of said plates (26, 27), being opposite to said second side (35, 37).

3. The structure according to claim 2, **characterised in that** each of said groups comprises four arms (41, 42, 43, 44) arranged in the shape of the letter X, one base of which is anchored in said first plate (26) and one vertex of which is anchored in said second plate (27).

4. The structure according to any one of claims 2 or 3, **characterised in that** a volume that is delimited by said two plates (26, 27) and said two groups (31, 32) is filled with an elastomer.

5. The structure according to any one of the preceding claims, **characterised in that** the first of said two plates (26) is fixed to said first panel (11) by means of at least one clip (50).

6. The structure according to any one of claims 1 to 4, **characterised in that** the first of said two plates (26) is fixed to said first panel (11) by riveting.

7. The structure according to any one of the preceding claims, **characterised in that** the first of said two plates (26) is fixed to said first panel (11) through a pad (20).
